# EUROPEAN PATENT APPLICATION

(11) **EP 4 421 902 A1**
(43) Date of publication of application: **28.08.2024**
(21) Application number: 22883217.6
(22) Date of filing: 31.08.2022
(51) Int. Cl.: H01M 4/1395, B30B 3/00, H01M 4/38

(54) **ROLL PRESS DEVICE AND PRESSING METHOD**

(30) Priority: 22.10.2021 JP 2021173379
(71) Applicant: Panasonic Intellectual Property Management Co., Ltd., Osaka-shi, Osaka 540-6207 (JP)
(72) Inventor: TANIGUCHI, Yasushi, Kadoma-shi, Osaka 571-0057 (JP); NISHIKAWA, Kazutaka, Kadoma-shi, Osaka 571-0057 (JP); NAKAJO, Masahiro, Kadoma-shi, Osaka 571-0057 (JP); KURODA, Masanori, Kadoma-shi, Osaka 571-0057 (JP)
(74) Representative: Eisenführ Speiser
(86) International application number: PCT/JP2022/032743
(87) International publication number: WO 2023/067905

(57) **Abstract**

In a roll press apparatus (1), a main conveyer line (10) conveys a metal foil (W1) to be used as a substrate. A pressurizing roll (12) is provided on the main conveyer line (10). A lithium conveyer line (20, 30) is a conveyer line (20, 30) that conveys a lithium foil (W2, W3) to be bonded to the metal foil (W1) and merges with the main conveyer line (10) on an upstream side of the pressurizing roll (12). The pressurizing roll (12) rolls the lithium foil (W2, E3) on a surface of the metal foil (W1) and bonds the lithium foil (W2, E3) to the surface of the metal foil (W1) by pressure-bonding.

## Description

### TECHNICAL FIELD

The present disclosure relates to a roll press apparatus and a pressure-bonding method.

### BACKGROUND ART

In recent years, development of lithium metal secondary batteries using lithium metal as the negative electrode has progressed. A lithium metal secondary battery has a higher energy density than a lithium ion secondary battery, and the theoretical capacity of a lithium metal negative electrode is extremely large, i.e., about 10 times that of a general graphite negative electrode. Recent development has led to advanced measures to deal with formation of lithium metal dendrites, which has been an issue in lithium metal secondary batteries, and popularization of lithium metal secondary batteries is expected.

There is a method of forming a negative electrode of a lithium metal secondary battery by bonding a lithium foil to a metal foil (e.g., a copper foil) to be used as a substrate. This method requires rolling of the lithium foil. Patent Literature 1 discloses a rolling apparatus for thinning a lithium foil (primary foil) having a thickness of about 0.1 to 0.2 mm by using three rolls successively to form a lithium foil (secondary foil) having a thickness of about 100 nm to 30 pm.

Conventionally, it has been common to roll a lithium foil sandwiched between films (e.g., PP films), conveying the product to a bonding apparatus after rolling, peeling the films, and then bonding the lithium foil to a metal foil to be used as a substrate.

### RELATED-ART LITERATURE

### PATENT LITERATURE

Patent Literature 1: JP 2011-8997

### SUMMARY OF INVENTION

### TECHNICAL PROBLEM

In the general method described above, a film application process is required before the lithium foil is rolled, and a film peeling process is required after rolling and conveying. If these steps can be omitted, it will lead to simplification of the electrode plate production line and improvement in throughput.

The present disclosure addresses the issue described above, and a purpose thereof is to provide a technology of bonding a lithium foil to another metal foil efficiently.

### SOLUTION TO PROBLEM

A roll press apparatus according to an embodiment of the present disclosure includes: a main conveyer line that conveys a metal foil to be used as a substrate; a pressurizing roll provided on the main conveyer line; and a lithium conveyer line that is a conveyer line that conveys a lithium foil to be bonded to the metal foil and merges with the main conveyer line on an upstream side of the pressurizing roll. The pressurizing roll rolls the lithium foil on a surface of the metal foil and bonds the lithium foil to the surface of the metal foil by pressure-bonding.

Optional combinations of the aforementioned constituting elements, and implementations of the disclosure in the form of methods, apparatuses, and systems may also be practiced as additional aspects of the present disclosure.

### ADVANTAGEOUS EFFECTS OF INVENTION

According to the present disclosure, it is possible to bond a lithium foil to another metal foil efficiently.

### BRIEF DESCRIPTION OF DRAWINGS

[Fig. 1] Fig. 1 is a diagram schematically showing a roll press apparatus according to the embodiment.
[Fig. 2] Fig. 2 is a diagram schematically showing how the first lithium foil and the second lithium foil are stretched on the copper foil in the conveyance direction in response to the load from the pressurizing roll.

### DESCRIPTION OF EMBODIMENTS

Hereinafter, the present disclosure will be described based on preferred embodiments with reference to drawings. The embodiments do not limit the scope of the present disclosure but exemplify the disclosure. Not all of the features and the combinations thereof described in the embodiments are necessarily essential to the present disclosure. Identical or like constituting elements, members, processes shown in the drawings are represented by identical symbols and a duplicate description will be omitted as appropriate. The scales and shapes shown in the figures are defined for convenience's sake to make the explanation easy and shall not be interpreted limitatively unless otherwise specified. Terms like "first", "second", etc. used in the specification and claims do not indicate an order or importance by any means unless otherwise specified and are used to distinguish a certain feature from the others. Those of the members that are not material to the description of the embodiments are omitted in the drawings.

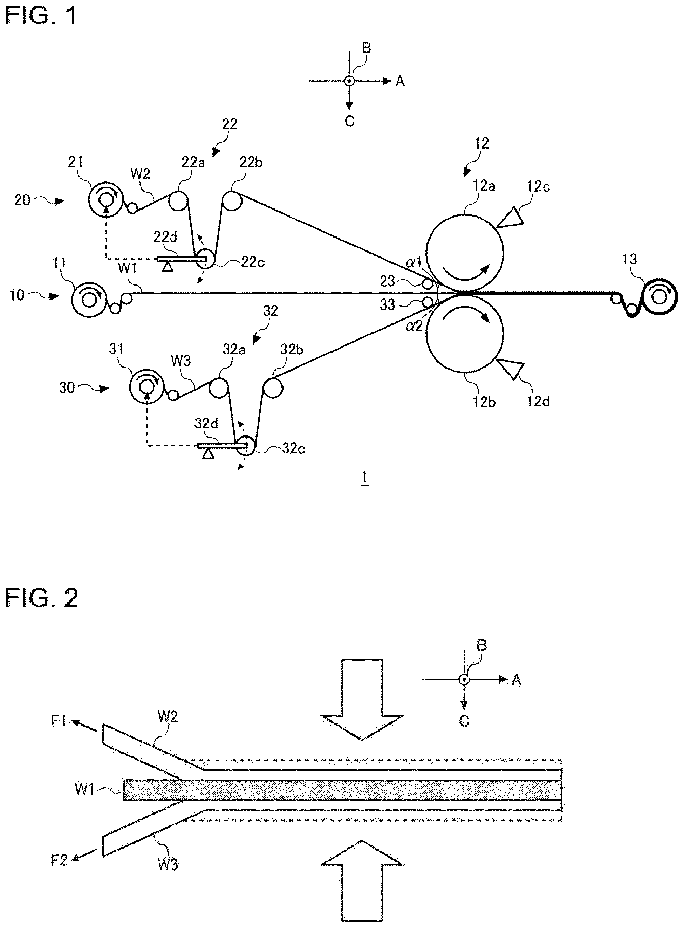

Fig. 1 is a diagram schematically showing a roll press apparatus 1 according to the embodiment. The roll press apparatus 1 includes a first conveyer line 10, a second conveyer line 20, and a third conveyer line 30. The first conveyer line 10 is a main conveyer line for conveying a copper foil W1 to be used as a substrate. A first feed apparatus 11, a pressurizing roll 12, and a take-up apparatus 13 are provided in the first conveyer line 10.

The second conveyer line 20 is a conveyer line for conveying a first lithium foil W2 to be bonded to the surface on the front side of the copper foil W1. A second feed apparatus 21, a first dancer roll mechanism 22, and a first angle regulation roll 23 are provided in the second conveyer line 20. The second conveyer line 20 merges with the first conveyer line 10 on the upstream side of the pressurizing roll 12.

The third conveyer line 30 is a conveyer line for conveying a second lithium foil W3 to be bonded to the surface on the back side of the copper foil W1. A third feed apparatus 31, a second dancer roll mechanism 32, and a second angle regulation roll 33 are provided in the third conveyer line 30. The third conveyer line 30 merges with the first conveyer line 10 on the upstream side of the pressurizing roll 12.

The first feed apparatus 11 is disposed at the starting point of the first conveyer line 10, holds the copper foil W1 in a wound state, and feeds the copper foil W1 toward the pressurizing roll 12. The second feed apparatus 21 is disposed at the start of the second conveyer line 20, holds the first lithium foil W2 in a wound state, and feeds the first lithium foil W2 toward the first dancer roll mechanism 22. The third feed apparatus 31 is disposed at the starting point of the third conveyer line 30, holds the second lithium foil W3 in a wound state, and feeds the second lithium foil W3 toward the second dancer roll mechanism 32.

The take-up apparatus 13 is disposed at the end point of the first conveyer line 10 and takes up a bonded product, in which the first lithium foil W2 and the second lithium foil W3 are pressure-bonded by the pressurizing roll 12 to both sides of the copper foil W1, in, for example, a wound state. This bonded product is used, for example, as a negative electrode material of a lithium metal secondary battery. In that case, since it is desirable that the first lithium foil W2 and the second lithium foil W3 are bonded to the entirety of the front and back surfaces of the copper foil W1, the length of the first lithium foil W2 and the second lithium foil W3 in the width direction B desirably matches the length of the copper foil W1in the width direction B. In the later cutting step, the length of the first lithium foil W2 and the second lithium foil W3 in the width direction B may be configured to be equal to the length of the copper foil W1 in the width direction B.

Depending on the cell specification of the lithium metal secondary battery, the length of the first lithium foil W2 and the second lithium foil W3 in the width direction B may be designed to be shorter than the length of the copper foil W1 in the width direction B. The length of the first lithium foil W2 and the second lithium foil W3 in the width direction B may also be designed to be shorter than the length of the copper foil W1 in the width direction B when the bonded product is used for an alternative purpose.

The first feed apparatus 11, the second feed apparatus 21, the third feed apparatus 31, and the take-up apparatus 13 each has a servo motor (not shown), and the servo motor is adapted to control the rotation speed and rotation torque of the roll. The feed speed of the first feed apparatus 11 and the take-up speed of the take-up apparatus 13 are basically configured to match. The feed speed of the second feed apparatus 21 and the third feed apparatus 31 varies according to feedback control (details will be described later) for suppressing fluctuations in the tension applied to the first lithium foil W2 and the second lithium foil W3 in response to the rolling by the pressurizing roll 12. Due to this feedback control, the feed speed of the second feed apparatus 21 and the third feed apparatus 31 may be smaller than the feed speed of the first feed apparatus 11.

The pressurizing roll 12 has a pair of upper roll 12a and lower roll 12b. The upper roll 12a and the lower roll 12b are disposed opposite to each other in a detachable manner. The upper roll 12a rotates counterclockwise, and the lower roll 12b rotates clockwise. The pressurizing roll 12 rolls the first lithium foil W2 and the second lithium foil W3 and bonds the first lithium foil W2 and the second lithium foil W3 to the copper foil W1 by pressure-bonding, by sandwiching a laminated product, in which the first lithium foil W2 is laminated on the upper surface of the copper foil W1 in the thickness direction C and the second lithium foil W3 is laminated on the lower surface, with the upper roll 12a and lower roll 12b.

By adjusting a gap width between the upper roll 12a and the lower roll 12b, the load applied to the laminated product located in the gap is adjusted, and the thickness of the first lithium foil W2 and the second lithium foil W3 after rolling is adjusted. In this embodiment, it is assumed that the thickness of the first lithium foil W2 before rolling is about 200 um to 10 um, and the thickness of the first lithium foil W2 after rolling is about 100 um to 5 um. The same applies to the second lithium foil W3.

A thickness gauge (not shown) is provided downstream of the pressurizing roll 12, and the gap between the upper roll 12a and the lower roll 12b is controlled so that the width of the first lithium foil W2, the copper foil W1, and the second lithium foil W3 in the thickness direction C measured by the thickness gauge is a target width.

The pressurizing roll 12 rolls and bonds a laminated product comprised of the first lithium foil W2, the copper foil W1, and the second lithium foil W3 located in the gap by cold-rolling. Since lithium has the property of being bonded to metals easily, the first lithium foil W2 and the second lithium foil W3 can be bonded to the copper foil W1 only by pressurization and without heating or using an adhesive.

In this embodiment, it is assumed that a metal roll is used for the upper roll 12a and the lower roll 12b. When a metal roll is used, the first lithium foil W2 may be bonded to the upper roll 12a, or the second lithium foil W3 may be bonded to the lower roll 12b so that the first lithium foil W2 or the second lithium foil W3 may be prevented from being bonded to the copper foil W1.

A first nozzle 12c for applying a lubricant to the circumferential surface of the upper roll 12a and a second nozzle 12d for applying a lubricant to the circumferential surface of the lower roll 12b are provided at positions adjacent to the pressurizing roll 12. The lubricant is supplied from a tank (not shown) to the first nozzle 12c and the second nozzle 12d via a pipe (not shown), and the lubricant is applied at a predetermined pressure from the first nozzle 12c to the circumferential surface of the upper roll 12a and from the second nozzle 12d to the circumferential surface of the lower roll 12b.

The lubricant may be interposed between the first lithium foil W2 and the upper roll 12a. Therefore, the first nozzle 12c may installed on the second conveyer line 20 before a position where the first lithium foil W2 is inserted into the pressurizing roll 12 so as to be oriented to apply the lubricant toward the upper surface of the first lithium foil W2 in the thickness direction C. Similarly, the lubricant may be interposed between the second lithium foil W3 and the lower roll 12b. Therefore, the second nozzle 12d may be installed on the third conveyer line 30 before a position where the second lithium foil W3 is inserted into the pressurizing roll 12 so as to be oriented to apply the lubricant toward the lower surface of the second lithium foil W3 in the thickness direction C.

Since the lubricant can be a factor to inhibit the performance of the battery, it is desirable to use a volatile lubricant. A removal apparatus for removing the lubricant applied upstream may be provided downstream of the pressurizing roll 12.

When a resin roll is used for the upper roll 12a and the lower roll 12b, it is not necessary to apply a lubricant between the first lithium foil W2 and the upper roll 12a and between the second lithium foil W3 and the lower roll 12b. The first nozzle 12c, the second nozzle 12d, the pipe, and the tank may be omitted.

According to a test conducted by the present inventors, it has been confirmed that wrinkles are likely to occur in the first lithium foil W2 when the first lithium foil W2 and the copper foil W1 are inserted into the pressurizing roll 12 while the first lithium foil W2 is in contact with the copper foil W1. Meanwhile, it was confirmed that wrinkles are unlikely to occur in the first lithium foil W2 when the first lithium foil W2 and the copper foil W1 are inserted into the pressurizing roll 12 while the first lithium foil W2 is in not in contact with the copper foil W1. The same relationship was also confirmed for the second lithium foil W3 and the copper foil W1.

Further, according to a test conducted by the present inventors, the first lithium foil W2 and the second lithium foil W3 are, when rolled by the pressurizing roll 12, hardly stretched in the width direction B, hardly stretched forward (downstream side) in the conveyance direction A, and stretched backward (upstream side) in the conveyance direction A.

Fig. 2 is a diagram schematically showing how the first lithium foil W2 and the second lithium foil W3 are stretched on the copper foil W1 in the conveyance direction A in response to a load from the pressurizing roll 12. When a load is applied to the first lithium foil W2 and the second lithium foil W3 from the pressurizing roll 12, the lithium metal of the first lithium foil W2 and the second lithium foil W flows, and a force F1 that pushes the first lithium foil W back to the upstream side and a force F2 that pushes the second lithium foil W3 back to the upstream side are exerted. These forces F1-F2 could cause the first lithium foil W2 and the second lithium foil W3 to wrinkle on the copper foil W1.

Reference is made back to Fig. 1. The first dancer roll mechanism 22 is installed between the second feed apparatus 21 and the pressurizing roll 12 on the second conveyer line 20. The first dancer roll mechanism 22 controls the tension applied to the first lithium foil W2 in the conveyance direction A so that the tension applied to the first lithium foil W2 in the conveyance direction A is constant. The first dancer roll mechanism 22 includes a pair of entry guide roll 22a and exit guide roll 22b, a dancer roll 22c, and a dancer arm 22d.

The dancer roll 22c is coupled to and supported by the end of the dancer arm 22d that rotates up and down around a fixed point. The dancer roll 22c is disposed above the first lithium foil W2 conveyed between the entry guide roll 22a and the exit guide roll 22b with respect to the thickness direction C. The dancer roll 22c is adapted to apply a load to the first lithium foil W2 from above with respect to the thickness direction C. When the tension applied to the first lithium foil W2 in the conveyance direction A increases, the dancer roll 22c moves upward. When the tension applied to the first lithium foil W2 decreases, the dancer roll 22c moves downward.

A position sensor (not shown) is provided at the fulcrum of the dancer arm 22d, and the position sensor detects the vertical position of the dancer roll 22c by referring to the rotation angle of the dancer arm 22d. The position sensor converts the detected vertical position of the dancer roll 22c into an electrical position signal and outputs it to the controller (not shown).

The controller calculates the rotational torque (control level) of the powdered brake (not shown) or the servo motor of the second feed apparatus 21 so that the amount of deviation (deviation amount) between the position of the dancer roll 22c input from the position sensor and the position of the dancer roll 22c corresponding to a target tension of the first lithium foil W2 is 0. For example, the controller calculates the rotational torque by PID compensation. The powder brake or servo motor of the second feed apparatus 21 controls the excitation current according to the rotational torque set by the controller to control the tension applied to the first lithium foil W2.

Specifically, when the tension applied to the first lithium foil W2 increases, the powder brake or servo motor of the second feed apparatus 21 reduces the excitation current to lower the rotational torque. As a result, the feed speed of the second feed apparatus 21 is reduced, and the tension applied to the first lithium foil W2 is reduced. When the tension applied to the first lithium foil W2 decreases, on the other hand, the powder brake or servo motor of the second feed apparatus 21 increases the excitation current to increase the rotational torque. As a result, the feed speed of the second feed apparatus 21 is increased, and the tension applied to the first lithium foil W2 is increased.

In addition, the servo control described above may be stopped in a range in which the tension applied to the first lithium foil W2 can be maintained constant according to the weight of the dancer roll 22c itself and the vertical movement thereof. Further, a pneumatic actuator (not shown) configured to apply a certain load to the dancer roll 22c may be provided so that the dancer roll 22c moves downward. In this case, the range in which the tension applied to the first lithium foil W2 can be maintained constant can be expanded by the vertical movement of the dancer roll 22c without executing the servo control described above.

The second dancer roll mechanism 32 is installed between the third feed apparatus 31 and the pressurizing roll 12 on the third conveyer line 30. The second dancer roll mechanism 32 controls the tension applied to the second lithium foil W3 in the conveyance direction A so that the tension applied to the second lithium foil W3 in the conveyance direction A is constant. The second dancer roll mechanism 32 includes a pair of entry guide roll 32a and exit guide roll 32b, a dancer roll 32c, and a dancer arm 32d. Since the structure of the second dancer roll mechanism 32 is the same as the structure of the first dancer roll mechanism 22, a description thereof is omitted.

The first angle regulation roll 23 is installed between the first dancer roll mechanism 22 and the pressurizing roll 12 on the second conveyer line 20. One or more guide rolls (not shown) for guiding the first lithium foil W2 to the pressurizing roll 12 may be provided between the first dancer roll mechanism 22 and the first angle regulation roll 23. The first angle regulation roll 23 regulates the incident angle α1 formed when the first lithium foil W2 is inserted into the pressurizing roll 12 at the first predetermined angle or greater. The first predetermined angle is determined based on experiments and simulations conducted by the designer so that the copper foil W1 and the first lithium foil W2 are inserted into the gap of the pressurizing roll 12 in a non-contact state.

As described above, since a lubricant is applied to the circumferential surface of the upper roll 12a, there is no problem even if the first lithium foil W2 and the upper roll 12a come into contact before the first lithium foil W2 is inserted into the gap of the pressurizing roll 12. Therefore, there is no problem even if the first lithium foil W2 is inserted into the gap of the pressurizing roll 12 at an angle greater than the first predetermined angle.

When the first lithium foil W2 is inserted into the gap of the pressurizing roll 12 while the first lithium foil W2 is in contact with the copper foil W1, on the other hand, the first lithium foil W2 does not slide well on the surface of the front side of the copper foil W1 when pressurized by the pressurizing roll 12, which could cause wrinkles in the first lithium foil W2. Since the first lithium foil W2 has the property of being bonded to the copper foil W1 easily, contact between the first lithium foil W2 and the copper foil W1 before the rolling of the first lithium foil W2 produces a contact resistance that hinders the backward stretch of the first lithium foil W2 in the conveyance direction A induced by rolling, with the result that wrinkles are more likely to occur in the first lithium foil W2.

The first angle regulation roll 23 may not be of a fixed type but may be of a variable type that can be moved up and down. In that case, the lower end position of the range of movement of the first angle regulation roll 23 is set to a position corresponding to the position of installation of the first angle regulation roll 23 of a fixed type. Further, a pneumatic actuator (not shown) that applies a certain load to the first angle regulation roll 23 so that the first angle regulation roll 23 moves in the upward direction is provided. The load applied to the first angle regulation roll 23 is set to a value within a range that does not restrict the vertical movement of the first lithium foil W2 that follows the vertical movement of the dancer roll 22c within the range of movement of the first angle regulation roll 23.

The second angle regulation roll 33 is installed between the second dancer roll mechanism 32 and the pressurizing roll 12 on the third conveyer line 30. One or more guide rolls (not shown) for guiding the second lithium foil W3 to the pressurizing roll 12 may be provided between the second dancer roll mechanism 32 and the second angle regulation roll 33. The second angle regulation roll 33 regulates the incident angle α2 formed when the second lithium foil W3 is inserted into the pressurizing roll 12 at the second predetermined angle or greater. The second predetermined angle is determined based on experiments and simulations conducted by the designer so that the copper foil W1 and the second lithium foil W3 are inserted into the gap of the pressurizing roll 12 in a non-contact state. The second predetermined angle may be the same as the first predetermined angle or may be a different angle.

As described above, since a lubricant is applied to the circumferential surface of the upper roll 12b, there is no problem even if the second lithium foil W3 and the lower roll 12b come into contact before the second lithium foil W3 is inserted into the gap of the pressurizing roll 12. Therefore, there is no problem even if the second lithium foil W3 is inserted into the gap of the pressurizing roll 12 at an angle greater than the second predetermined angle.

When the second lithium foil W3 is inserted into the gap of the pressurizing roll 12 while the second lithium foil W3 is in contact with the copper foil W1, on the other hand, the second lithium foil W3 does not slide well on the surface of the back side of the copper foil W1 when pressurized by the pressurizing roll 12, which could cause wrinkles in the second lithium foil W3.

The second angle regulation roll 33 may not be of a fixed type but may be of a variable type that can be moved up and down. In that case, the upper end position of the range of movement of the second angle regulation roll 33 is set to a position corresponding to the position of installation of the second angle regulation roll 33 of a fixed type. Further, a pneumatic actuator (not shown) that applies a certain load to the second angle regulation roll 33 so that the second angle regulation roll 33 moves in the downward direction is provided. The load applied to the second angle regulation roll 33 is set to a value within a range that does not restrict the vertical movement of the second lithium foil W3 that follows the vertical movement of the dancer roll 32c within the range of movement of the second angle regulation roll 33.

As described above, according to the roll press apparatus 1 according to this embodiment, the first lithium foil W2 and the second lithium foil W3 are simultaneously rolled and pressure-bonded by the pressurizing roll 12 on the front and back sides of the copper foil W1, thereby making it possible to form a bonded product comprised of a lithium metal and a dissimilar metal efficiently. Compared with the conventional method of rolling a lithium foil in a state of being sandwiched between films, conveying the product to a bonding apparatus after rolling, peeling off the films, and then bonding the rolled lithium foil to a copper foil, the production line can be shortened and the throughput can be improved.

Further, providing the first dancer roll mechanism 22 on the upstream side of the pressurizing roll 12 removes the sagging of the first lithium foil W2 on the copper foil W1 due to the backward stretch of the first lithium foil W2 in the conveyance direction A that occurs when a pressure is applied by the pressurizing roll 12. Further, providing the first angle regulation roll 23 before the pressurizing roll 12 makes it possible to insert the copper foil W1 and the first lithium foil W2 into the pressurizing roll 12 in a non-contact state. As a result, the first lithium foil W2 can be caused to slide smoothly on the copper foil W1 backward in the conveyance direction A when pressurized by the pressurizing roll 12. According to the above configuration, it is possible to suppress the occurrence of wrinkles in the first lithium foil W2 pressurized by the pressurizing roll 12.

Similarly, providing the second dancer roll mechanism 32 on the upstream side of the pressurizing roll 12 removes the sagging of the second lithium foil W3 on the copper foil W1 due to the backward stretch of the second lithium foil W3 in the conveyance direction A that occurs when a pressure is applied by the pressurizing roll 12. Further, providing the second angle regulation roll 33 before the pressurizing roll 12 makes it possible to insert the copper foil W1 and the second lithium foil W3 into the pressurizing roll 12 in a non-contact state. As a result, the second lithium foil W3 can be caused to slide smoothly on the copper foil W1 backward in the conveyance direction A when pressurized by the pressurizing roll 12. According to the above configuration, it is possible to suppress the occurrence of wrinkles in the second lithium foil W3 pressurized by the pressurizing roll 12.

Een if the first lithium foil W2 and the second lithium foil W3 are simultaneously rolled and pressure-bonded by the pressurizing roll 12 on the copper foil W1, therefore, a high-quality, wrinkle-free bonded product comprised of a lithium metal and a dissimilar metal can be produced.

The embodiments of the present disclosure are described above in detail. The embodiments described above are merely specific examples of practicing the present disclosure. The details of the embodiment shall not be construed as limiting the technical scope of the present disclosure. A number of design modifications such as modification, addition, deletion, etc. of constituting elements may be made to the extent that they do not depart from the idea of the invention defined by the claims. New embodiments with design modifications will provide the combined advantages of the embodiment and the variation. Although the details subject to such design modification are emphasized in the embodiment described above by using phrases such as "of this embodiment" and "in this embodiment", details not referred to as such are also subject to design modification. Any combination of constituting elements included in the respective embodiments is also useful as an embodiment of the present disclosure. Hatching in the cross section in the drawings should not be construed as limiting the material of the hatched object.

In the above embodiment, an example of using a copper foil W1 as a substrate to which the first lithium foil W2 and the second lithium foil W3 should be bonded has been described. In this regard, a metal foil other than the copper foil W1 (excluding a lithium foil) may be used. For example, an aluminum foil may be used.

In the above embodiment, an example of detecting a tension applied to the lithium foil with a dancer roll has been described. Alternatively, a micro-displacement tension detector may be used to detect the tension applied to the lithium foil. The micro-displacement tension detector is a detector that converts the tension applied to the lithium foil into a load temporarily and extracts the minute displacement of a leaf spring in the presence of the load as an electrical signal. The signal detected by the micro-displacement tension detector is output to the controller for executing the servo control described above.

In the above embodiment, an example of bonding a lithium foil to both sides of the copper foil W1 has been described. Alternatively, the lithium foil may be bonded only to one side of the copper foil W1. When the first lithium foil W2 is bonded only to the surface on the front side of the copper foil W1, the third conveyer line 30 can be omitted. When the second lithium foil W3 is bonded only to the surface on the back side of the copper foil W1, on the other hand, the second conveyer line 20 can be omitted.

The embodiments may be defined by the following items.

### [Item 1]

A roll press apparatus (1) including:
a main conveyer line (10) that conveys a metal foil (W1) to be used as a substrate;
a pressurizing roll (12) provided on the main conveyer line (10); and
a lithium conveyer line (20, 30) that is a conveyer line (20, 30) that conveys a lithium foil (W2, W3) to be bonded to the metal foil (W1) and merges with the main conveyer line (10) on an upstream side of the pressurizing roll (12),
wherein the pressurizing roll (12) rolls the lithium foil (W2, W3) on a surface of the metal foil (W1) and bonds the lithium foil (W2, W3) to the surface of the metal foil (W1) by pressure-bonding.

According to this, it is possible to form a bonded product comprised of a lithium metal and a dissimilar metal efficiently.

### [Item 2]

The roll press apparatus (1) according to Item 1,
wherein the metal foil (W1) and the lithium foil (W2, W3) are inserted into the pressurizing roll (12) in a non-contact state.

According to this, it is possible to suppress the occurrence of wrinkles in the lithium foil (W2, W3) on the surface of the metal foil (W1) when the the lithium foil (W2, W3) is rolled and bonded by pressure-bonding.

### [Item 3]

The roll press apparatus (1) according to Item 2, further including:
an angle regulation roll (23, 33) that is provided on the lithium conveyer line (20, 30) and regulates an incident angle formed when the lithium foil (W2, W3) is inserted into the pressurizing roll (12) at a predetermined angle or greater.

According to this, it is possible to insert the metal foil (W1) and the lithium foil (W2, W3) into the pressurizing roll (12) in a non-contact state.

### [Item 4]

The roll press apparatus (1) according to any one of Items 1 through 3, further including:
a tension control mechanism (22, 32) that is provided on the lithium conveyer line (20, 30) and controls a tension applied to the lithium foil (W2, W3) so that the tension in a conveyance direction applied to the lithium foil (W2, W3) is constant.

This can properly absorb a force that pushes the lithium foil (W2, W3) upstream and suppress the occurrence of wrinkles in the lithium foil (W2, W3) on the surface of the metal foil (W1) when the lithium foil (W2, W3) is rolled and bonded by pressure bonding.

### [Item 5]

The roll press apparatus (1) according to any one of Items 1 through 4,
wherein the lithium conveyer line (20, 30) includes a second conveyer line (20) that merges with the main conveyer line (10) from above with respect to a conveyance direction and a third conveyer line (30) that merges with the main conveyer line (10) from below with respect to the conveyance direction,
wherein the pressurizing roll (12) bonds the lithium foil (W2) conveyed from the second conveyer line (20) to a surface on a front side of the metal foil (W1) by pressure-bonding and bonds the lithium foil (W3) conveyed from the third conveyer line (30) to a surface on a back side of the metal foil (W1) by pressure-bonding.

According to this, it is possible to form a bonded product in which a lithium metal is bonded to both surfaces of a dissimilar metal.

### [Item 6]

A pressure-bonding method including:
conveying a metal foil (W1) to be used as a substrate to a pressurizing roll (12); and
conveying a lithium foil (W2, W3) to be bonded to the metal foil (W1) to the pressurizing roll,
wherein the pressurizing roll (12) rolls the lithium foil (W2, W3) on a surface of the metal foil (W1) and bonds the lithium foil (W2, W3) to the surface of the metal foil (W1) by pressure-bonding.

According to this, it is possible to form a bonded product comprised of a lithium metal and a dissimilar metal efficiently.

### [Item 7]

The pressure-bonding method according to Item 6,
wherein the metal foil (W1) and the lithium foil (W2, W3) are inserted into the pressurizing roll (12) in a non-contact state.

This can suppress the occurrence of wrinkles on the surface of the metal foil (W1) when the lithium foil (W2, W3) is rolled and bonded by pressure-bonding.

### INDUSTRIAL APPLICABILITY

The present disclosure is applicable to the production of batteries.

### REFERENCE SIGNS LIST

1 roll press apparatus, 10 first conveyer line, 11 first feed apparatus, 12 pressurizing roll, 12a upper roll, 12b lower roll, 13 take-up apparatus, 20 second conveyer line, 21 second feed apparatus, 22 first dancer roll mechanism, 22a entry guide roll, 22b exit guide roll, 22c dancer roll, 22d dancer arm, 23 first angle regulation roll, 30 third conveyer line, 31 third feed apparatus, 32 second dancer roll mechanism, 33 second angle regulation roll, 34 guide roll, W1 coper foil, W2 first lithium foil, W3 second lithium foil

## Claims

1. A roll press apparatus comprising:
a main conveyer line that conveys a metal foil to be used as a substrate;
a pressurizing roll provided on the main conveyer line; and
a lithium conveyer line that is a conveyer line that conveys a lithium foil to be bonded to the metal foil and merges with the main conveyer line on an upstream side of the pressurizing roll,
wherein the pressurizing roll rolls the lithium foil on a surface of the metal foil and bonds the lithium foil to the surface of the metal foil by pressure-bonding.

2. The roll press apparatus according to Claim 1,
wherein the metal foil and the lithium foil are inserted into the pressurizing roll in a non-contact state.

3. The roll press apparatus according to Claim 2, further comprising:
an angle regulation roll that is provided on the lithium conveyer line and regulates an incident angle formed when the lithium foil is inserted into the pressurizing roll at a predetermined angle or greater.

4. The roll press apparatus according to any one of Claims 1 through 3, further comprising:
a tension control mechanism that is provided on the lithium conveyer line and controls a tension applied to the lithium foil so that the tension in a conveyance direction applied to the lithium foil is constant.

5. The roll press apparatus according to any one of Claims 1 through 3,
wherein the lithium conveyer line includes a second conveyer line that merges with the main conveyer line from above with respect to a conveyance direction and a third conveyer line that merges with the main conveyer line from below with respect to the conveyance direction,
wherein the pressurizing roll bonds the lithium foil conveyed from the second conveyer line to a surface on a front side of the metal foil by pressure-bonding and bonds the lithium foil conveyed from the third conveyer line to a surface on a back side of the metal foil by pressure-bonding.

6. A pressure-bonding method comprising:
conveying a metal foil to be used as a substrate to a pressurizing roll; and
conveying a lithium foil to be bonded to the metal foil to the pressurizing roll,
wherein the pressurizing roll rolls the lithium foil on a surface of the metal foil and bonds the lithium foil to the surface of the metal foil by pressure-bonding.

7. The pressure-bonding method according to Claim 6,
wherein the metal foil and the lithium foil are inserted into the pressurizing roll in a non-contact state.
